# EUROPÄISCHE PATENTANMELDUNG

(11) **EP 1 028 248 A1**
(43) Veröffentlichungstag der Anmeldung: **16.08.2000**
(21) Anmeldenummer: 99101704.7
(22) Anmeldetag: 09.02.1999
(51) Int. Cl.: F02G 5/02, F02B 75/02, F02B 41/00, F02B 47/00

(54) **4 Takt - 2 Stoff Motor**

(71) Anmelder: von Görtz & Finger Techn. Entwicklungs Ges.m.b.H., 36110 Schlitz (DE)
(72) Erfinder: Graf von Görtz, Rüdiger, 36110 Schlitz (DE); Finger, Ulrich, 87647 Oberthingau (DE)

(57) **Zusammenfassung**

Die Erfindung richtet sich an Verbrennungsmotore und ist Bestandteil der Viertakt-Arbeitsweise. Nach der Verbrennung wird im Arbeitstakt 3 nach OT eine Flüssigkeit in den Brennraum eingespritzt **Fig.1B** und diesem Wärmeenergie entzogen. Dadurch verdampft die eingespritzte Flüssigkeit schlagartig und es entsteht ein zusätzlicher Druck auf den Kolben. **Fig.2**

Die Einspritzmenge der Flüssigkeit richtet sich nach der Kolbenoberflächentemperatur, die mit Thermoelementen **15**, die in die Zylinderkopfdichtung **21** eingearbeitet sind, **Fig.2** gemessen wird. Zur besseren Temperaturerfassung sind in die Kolben Nuten eingefräst **24**. In der Kolbenmulde **22** befindet sich ein Kupferdrahtgestrick, daß die Verbrennungswärme speichert und an die eingespritzte Flüssigkeit wieder abgibt.

Für die zusätzliche Einspritzung einer Flüssigkeit wird eine zusätzliche Pumpe **1 Fig.4** benötigt. Diese kann über Zahnriemen oder direkt elektrisch angetrieben werden. Der Einspritzdruck wird über einen Drucksensor **18** geregelt.

Ein Teil der eingespritzten Flüssigkeit kann durch einen Abgaskondensator **11** zurückgewonnen werden. Die Kondensationswärme wird für die Erhitzung der Flüssigkeit genutzt.

## Beschreibung

Die Speicherung und der Transport von Energie für den Betrieb von Verbrennungsmotoren beschränkt sich z.Z. auf fossile Brennstoffe wie Benzin, Dieseltreibstoff und Erdgas.

Die Erfindung richtet sich auf ein Verfahren zur zusätzlichen Nutzung der Verbrennungswärme eines Verbrennungsmotors in zusätzliche mechanische Leistung.

Bei Verbrennungsmotoren werden nur ca. 35% der bei der Verbrennung frei werdenden Energie in mechanische Leistung überführt. Der Rest geht als Abwärme über die Oberfläche des Motorblocks,den Kühlkreislauf und die Abgase verloren. Lediglich ein kleiner Teil kann über den Kühlwasserkreislauf und die fahrzeugeigene Heizung genutzt werden. Aufgrund der relativ hohen Kraftstoffkosten und der CO2 - Belastung durch die Abgase, wäre eine Erhöhung des Wirkungsgrades durch höhere Nutzung der Abwärme wünschenswert. Es ist jedoch bislang nicht gelungen, in dieser Richtung einen nennenswerten Fortschritt zu erzielen.

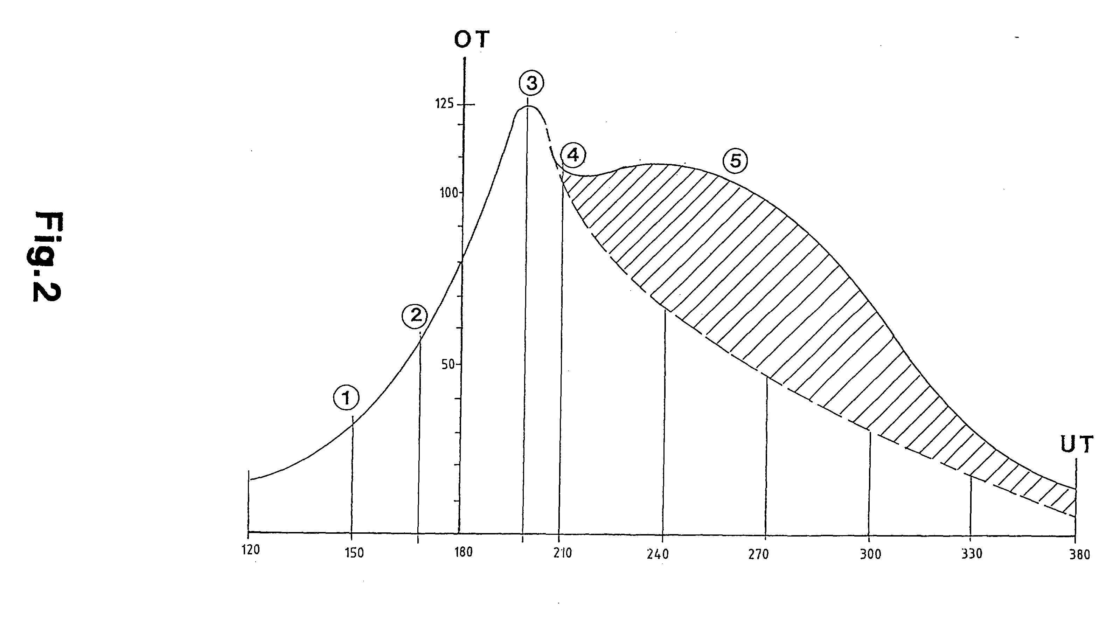

Es ist die Aufgabe der vorliegenden Erfindung, ein Verfahren zu schaffen, bei dem zumindest ein Teil der über die Abgase und den Motorblock verlorengehenden Energie in zusätzliche mechanische Arbeit umgewandelt wird. Zu diesem Zweck ist der erfindungsgemäße Gedanke eines Verfahrens zur Nutzung der Abwärme eines Verbrennungsmotors, daß zumindest ein Teil der in den Abgasen des Arbeitstaktes sowie im Motorblock enthaltenen Energie genutzt wird. Die Verdampfung einer nach der Verbrennung in den Verbrennungsraum und in das Abgas des Arbeitstaktes eingespritzten Flüssigkeit, führt zu einer Erhöhung des Gesamtdrucks des Gemisches aus Abgasen und Flüssigkeitsdampf, der während des restlichen Arbeitstaktes in mechanische Arbeit überführt wird. Aus den Diagramm **Fig.2** ist zu erkennen, daß der Druck und die Temperatur nachdem O.T. am höchsten ist und dann stark abfällt.Zu diesem Zeitpunkt muß die Flüssigkeit eingespritzt werden, damit sich diese durch die vorhandene Wärme in den Brenngas und am Motorblock in Millisenkunden in Dampf umwandelt und so einen zusätzlichen Druck auf den Kolben ausübt.

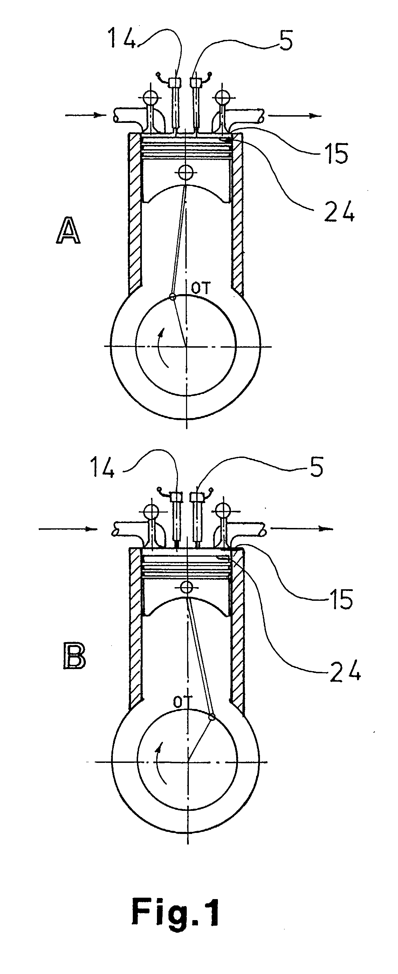

Der Arbeitszyklus besteht bei der Anwendung des erfindungsgemäßen Verfahrens aus **vier Takten**. Wie aus Fig.1 zu ersehen ist, besteht der Arbeitsablauf aus den folgenden Arbeitsgängen, sowohl beim Diesel- als auch beim Benzin- Gasmotor:
1) Ansaugen der Luft oder des Gasgemisches
2) Verdichten der Luft oder des Gasgemisches
   2.1) Dieseleinspritzung oder Zündung **vor OT**
3) Verbrennung - Explosion
   3.1) Fluideinspritzung **nach OT**
   3.2) Dampfbildung - Expansion
   3.3) Arbeitstakt **bis UT**
4) Ausschub des Abgas-Dampfgemisches

Nach Beendigung der Verbrennung wird eine Flüssigkeit eingespritzt. An den heißen Oberflächen des Verbrennungsraumes und durch die Aufnahme der Wärmeenergie der Abgase verdampft die Flüssigkeit schlagartig. Der Phasenübergang führt zu einer Erhöhung des Gesamtdrucks des Gemisches aus Abgasen und Flüssigkeitsdampf.
Da sich der Kolben nun in Expansionsrichtung bewegt, kann dieser erhöhte Druck sofort zusätzliche mechanische Arbeit an der Kurbelwelle leisten. Die dabei aufgebrachte Energie wird sowohl dem Abgas als auch den Oberflächen des heissen Verbrennungsraumes entzogen. Der Motor wird optimal gekühlt, da die Wärme direkt am Entstehungsort abgeführt wird.

Es liegt im Rahmen der Erfindung, daß das Gemisch aus Abgasen und Flüssigkeitsdampf durch die Öffnungen der geöffneten Auslaßventile ausgestoßen werden. Die ausgestoßenen vermischten Abgase weisen eine niedrige Temperatur auf.

Durch eine geeignete Vorrichtung, welche die ausgestoßenen Gase durchlaufen, Kann ein Teil der eingespritzten Flüssigkeit durch Kondensation zurückgewonnen werden. Dadurch wird ein zu hoher Flüssigkeitsverbrauch vermieden.

Ebenfalls kann die Kondensationswärme für die Vorwärmung der einzuspritzenden Flüssigkeit verwendet werden. Es besteht auch die Möglichkeit, der Flüssigkeit ein geeignetes Additiv beizumischen, um bessere Abgaswerte zu erhalten.

Die Flüssigkeit sollte mit hohen Druck über eine seperate Einspritzpumpe und eine möglichst kurze Verbindungsleitung zu einer Mehrlochdüse geführt werden. Damit wird erreicht, daß die Flüssigkeit in feinzerstäubten Aerosolen direkt in den Brennraum eingespritzt werden kann. In dem Kolben befindet sich eine muldenförmige Vertiefung, die mit einem feinen Kupferdrahtgestrick gefüllt sein könnte. Da Kupfer eine sehr hohe Wärmeleitfähigkeit besitzt, wird damit ein schnellerer Wärmeübergang von der gespeicherten Wärme aus dem Arbeitstakt erreicht und es erfolgt eine Verdampfung in wenigen Millisekunden.
Ebenfalls wird bei der Direkteinspritzung durch die Verdampfung der Flüssigkeit die Restwärme aus dem Arbeitstakt, die im Zylinderkopf, Kolben und Motorblock vorhanden ist, sofort übernommen.

Es ist vorteilhaft, daß eine Flüssigkeit mit hoher Wärmeleitfähigkeit eingespritzt wird. Durch diese Maßnahme wird erreicht, daß sowohl die Flüssigkeit als auch deren Dampf in einem kurzen Zeitraum viel Wärme aufnehmen können. Die eingespritzte Flüssigkeit erhitzt sich in einem kurzen Zeitraum auf ihre Siedetemperatur. Auch kann der Flüssigkeitsdampf während seines Verbleibens im Zylinderraum ständig einen hohen Betrag der im Motorblock gespeicherten Wärmemenge aufnehmen.

Es hat sich als günstig erwiesen, daß eine Flüssigkeit mit niedriger Siedetemperatur eingespritzt wird. Bei Verwendung einer derartigen Flüssigkeit ist der Zeitraum, in dem sich die eingespritzte Flüssigkeit auf ihre Siedetemperatur erhitzt, so gering als möglich. Der Verdampfungsvorgang kann somit sofort nach dem Einspritzen einsetzen. Nötigenfalls kann die Flüssigkeit vor dem Einspritzen bis knapp unter den erhöhten Siedepunkt während des Einspritzens erhitzt werden.

Es liegt im Rahmen der Erfindung, daß bei einem Hubkolbenmotor zur Durchführung des erfindungsmäßigen Verfahrens in dem Zylinderkopf zusätzlich eine Einspritzdüse zum fein zerstäubenden Einspritzen der Flüssigkeit angeordnet ist. Hierfür können handelsübliche Einspritzdüsen für Kraftstoff verwendet werden. Jedoch ist bei der Wahl der Düsen besonders darauf zu achten, daß die Flüssigkeit während des Einspritzens so fein als möglich zerstäubt wird. Je feiner die Flüssigkeit zerstäubt wird, um so größer ist die Oberfläche eines Flüssigkeitströpfchens im Verhältnis zu seinem Volumen. Diese Tatsache ist für einen schnellen Verdampfungsvorgang wichtig. Außerdem ist es günstig, wenn ein möglichst großer Teil der fein zerstäubten Flüssigkeit direkt auf die heißen Oberflächen des Brennraumes gelangt und seine Verdampfungswärme diesen Oberflächen entzieht, da diese eine bedeutend höhere Wärmeleitfähigkeit als die Abgase aufweisen.

Weitere Merkmale, Einzelheiten und Vorteile der Erfindung ergeben sich aus der folgenden Beschreibung eines Verfahrens und bevorzugter Ausführungsformen der Erfindung sowie anhand der Zeichnungen. Hierbei zeigt:

**Fig.1** Abbildung A das Einspritzen des Brennstoffes **vor OT** in die Kolbenmulde **23**. In Abbildung **B** wird bei etwa 15° Kurbelwinkel **nach O.T.** eine Flüssigkeit eingespritzt.

Dadurch erhöht sich der Druck im Brennraum, da die durch die Verbrennung entstandene Wärmeenergie in Dampf umgewandelt wird.

In **Fig.2** ist die Druckkurve über dem Kurbelwinkel dargestellt. Dabei bedeutet:
1) Verdichtung;
2) Brennstoffeinspritzung;
3) Druckhöchstpunkt;
4) Flüssigkeitseinspritzung;
5) Zusätzliche Leistung durch Dampfbildung und Expansion;

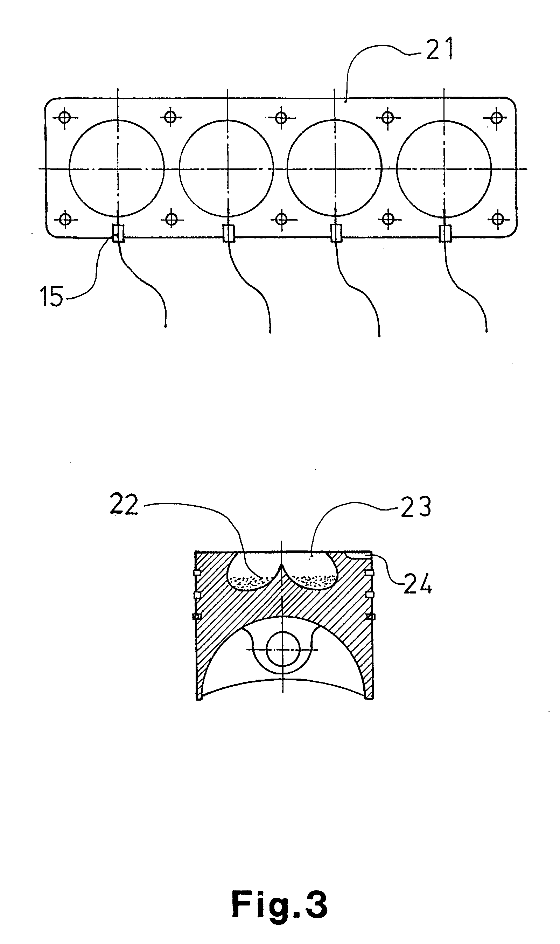

**Fig.3** zeigt die Zylinderkopfdichtung **21** mit den eingearbeiteten Thermoelementen **15**. Die Fühler zeigen in den Zylinderraum oberhalb des Kolbens, der an dieser Stelle eine Nut **24** eingefäst hat. Für eine bessere und schnellere Wärmeübertragung ist in der Kolbenmulde **23** ein Kupferdrahtgestrick **22** eingebaut.

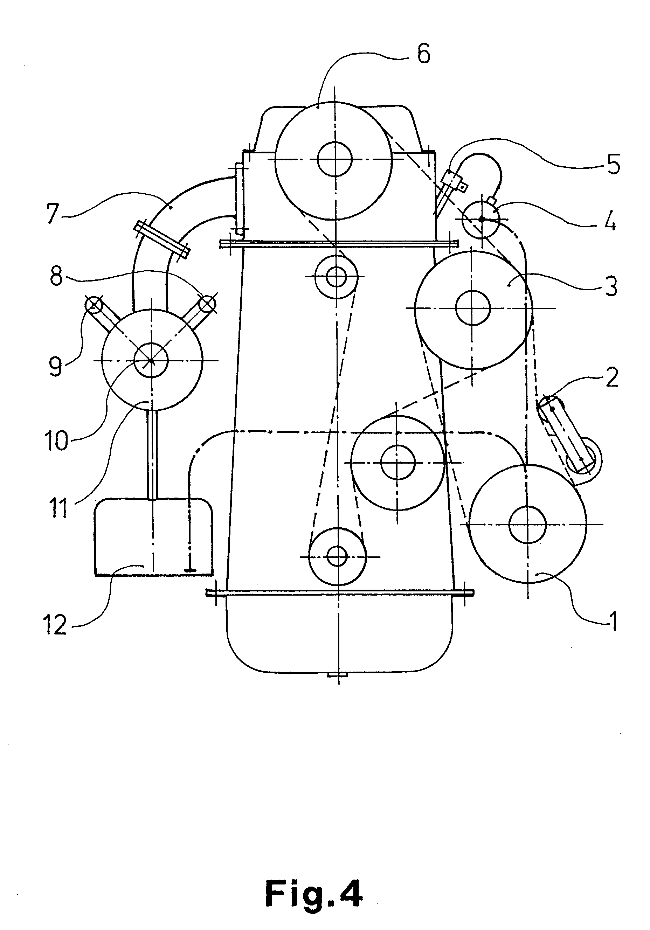

**Fig.4** zeigt die zusätzliche Einspritzpumpe **1** für die Flüssigkeit, die mit einem Zahnriemen und einer Spannrolle **2** direkt 1:1 von der Dieseleinspritzpumpe **3** angetrieben wird. Auf der linken Seite ist der Abgaskrümmer **7** mit dem angeschlossenen Abgaskondensator **11**, dem Vorlauf **8**, dem Rücklauf **9** für das Kühlwasser und der Abgasanschluß **10** zu sehen.

Darunter befindet sich der Flüssigkeitsbehälter **12**, in dem das Kondensat gesammelt wird, daß von der Pumpe **1** wieder angesaugt wird.

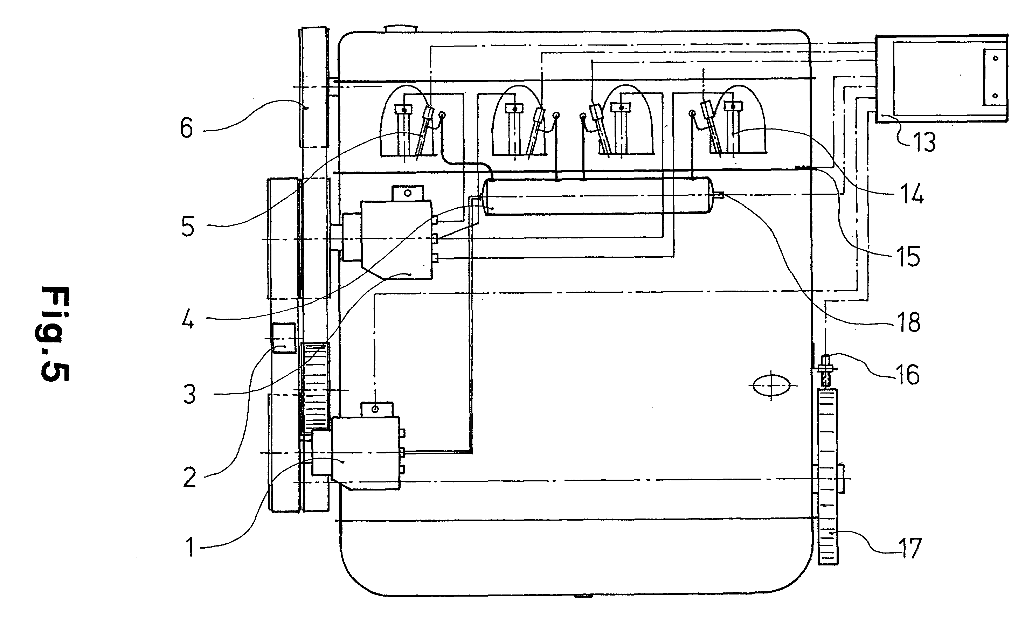

**Fig.5** In der Seitenansicht wird der Druckspeicher **4** und die zusätzliche Einspritzdüse **5** für die Flüssigkeit mit den dazugehörigen Rohrleitungen gezeigt.

Das Steuergerät **13** übernimmt folgende Funktionen:
a) Regelung der Einspritzmenge abhängig von den Meßwerten der Thermoelemente **15**.
b) Regelung des Einspritzzeitpunktes nach **OT** abhängig von dem Drehwinkelgeber **16**.
c) Regelung des Ladedruckes im Druckspeicher **4** abhängig vom Drucksensor **18**.

### Aufstellung der Positionen

1) Fluid-Pumpe
2) Spannrolle
3) Diesel-Pumpe
4) Druckspeicher
5) Fluid Einspritzdüse
6) Nockenwelle
7) Abgaskrümmer
8) Kühlung-Vorlauf
9) Kühlung-Rücklauf
10) Abgasrohr
11) Abgaskondensator
12) Fluid-Tank
13) Steuergerät
14) Diesel Einspritzdüse
15) Thermoelemente
16) Drehwinkelsensor
17) Schwungrad
18) Drucksensor
21) Zylinderkopfdichtung
22) Kupferdrahtgestrick
23) Kolbenmulde
24) Kolbennut

## Patentansprüche

1. Verfahren zur Abwärmenutzung eines Verbrennungsmotors, dadurch gekennzeichnet, daß ein Teil der in den Abgasen, sowie im Motorblock und Kolben enthaltenen Wärmeenergie durch Verdampfen einer nach Beendigung der Verbrennung in den Verbrennungsraum und in die Abgase eingespritzten Flüssigkeit genutzt wird. Damit erhöht sich der Gesamtdruck des Abgas/ Dampfgemisches und es wird zusätzliche mechanische Arbeit gewonnen.

2. Verfahren nach Anspruch 1 dadurch gekennzeichnet,daß die Flüssigkeit mit hohen Druck fein zerstäubt und in solcher Menge eingespritzt wird, daß sie durch die Wärmeenergie der Abgase und der Oberflächen des Verbrennungsraumes **schlagartig verdampft** wird.

3. Verfahren nach mindestens einem der Ansprüche 1 - 2 dadurch gekennzeichnet, daß eine Flüssigkeit mit hoher **Wärmeleitfähigkeit** und niedriger **Siedetemperatur** eingespritzt wird.

4. Verfahren nach mindestens einem der Ansprüche 1 - 3 dadurch gekennzeichnet, daß der eingespritzten Flüssigkeit ein Zusatz in Form von **Additiven** beigemischt wird das die Abgaswerte verbessert.

5. Verfahren nach mindestens einem der Ansprüche 1 - 4 dadurch gekennzeichnet, daß eine **zusätzliche Einspritzdüse** zum fein zerstäubenden Einspritzen der Flüssigkeit im Zylinderkopf angeordnet ist.

6. Verfahren nach mindestens einem der Ansprüche 1 - 5 dadurch gekennzeichnet, daß die Flüssigkeit feinst zerstäubt auf ein **Kupfergestrick**, das sich in einer Mulde des Kolbens befindet, eingespritzt wird.

7. Verfahren nach mindestens einem der Ansprüche 1 - 6 dadurch gekennzeichnet, daß durch das Einspritzen einer Flüssigkeit dem Brennraum und den heißen Gasen Wärme entzogen wird und dadurch ein schnellerer und effektiver **Kühlvorgang** erfolgt.

8. Verfahren nach mindestens einem der Ansprüche 1 - 7 dadurch gekennzeichnet, daß durch **Kondensation** der Abgase ein Teil der eingespritzten Flüssigkeit zurückgewonnen wird und die Restwärme für die Vorwärmung der Flüssigkeit verwendet werden.

9. Verfahren nach mindestens einem der Ansprüche 1 - 8 dadurch gekennzeichnet, daß in der Zylinderkopfdichtung **Thermoelemente** eingebaut sind, die in der **Mulde** des Kolbens die Oberflächentemperatur messen und mit dem Steuergerät die Einspritzmenge der Flüssigket bestimmen.
